# EUROPÄISCHE PATENTSCHRIFT

(11) **EP 3 674 676 B1**
(45) Veröffentlichungstag und Bekanntmachung des Hinweises auf die Patenterteilung: **17.07.2024**
(21) Anmeldenummer: 19217837.4
(22) Anmeldetag: 19.12.2019
(51) Int. Cl.: G01K 1/02, G01K 15/00

(54) **KALIBIERAUFBAU ZUM KALIBRIEREN EINES TEMPERATURMESSFÜHLERS UND VERFAHREN HIERZU**
CALIBRATION STRUCTURE FOR CALIBRATING A TEMPERATURE SENSOR AND METHOD FOR SAME
STRUCTURE D'ÉTALONNAGE PERMETTANT D'ÉTALONNER UNE SONDE DE TEMPÉRATURE ET PROCÉDÉ CORRESPONDANT

(30) Priorität: 27.12.2018 DE 102018133618
(43) Veröffentlichungstag der Anmeldung: 01.07.2020
(73) Patentinhaber: SIKA Dr.Siebert & Kühn GmbH & Co. KG., 34260 Kaufungen (DE)
(72) Erfinder: OPFERMANN, Martin, 34302 Guxhagen (DE)
(74) Vertreter: Walther Bayer Faber Patentanwälte PartGmbB

(56) Entgegenhaltungen:
- CN-A- 106 092 375
- CN-A- 107 687 911
- CN-U- 201 897 509
- US-B1- 6 527 437

## Beschreibung

Die Erfindung betrifft einen Kalibrieraufbau zum Kalibrieren eines Temperaturmessfühlers, mit einem Temperaturkalibrator, in den der Temperaturmessfühler einsetzbar und auf eine Kalibriertemperatur aufheizbar ist, und mit einer Temperaturmesseinheit, mit der der Temperaturmessfühler verbunden ist und mit der ein gemessener Temperaturwert auf einem Anzeigemittel der Temperaturmesseinheit anzeigbar ist.

### STAND DER TECHNIK

CN 107 687 911 A und CN 201 897 509 U offenbaren jeweils automatisierte Verfahren zum Kalibrieren eines Temperaturmessfühlers mit einem Kalibrieraufbau, wobei eine Anzeige eines zu kalibrierenden Temperatursensors von einer Kamera aufgenommen, und die Werte mithilfe digitaler Bildverarbeitung erkannt und elektronisch gespeichert werden können. US 6 527 437 B1 beschreibt die automatische Kalibration eines Thermoelements, wobei automatisch mehrere Temperaturen angefahren werden und dabei jeweils gewartet wird, bis sich ein thermisches Gleichgewicht eingestellt hat.

Die EP 2 793 008 A1 offenbart beispielhaft einen Temperaturkalibrator, in den ein Temperaturmessfühler einsetzbar und auf eine Kalibriertemperatur aufheizbar ist. Zum Aufheizen des Temperaturmessfühlers wird dieser in eine Kalibriereinrichtung eingesetzt, die wiederum in einem Kalibratorblock aufgenommen ist. Der Temperaturkalibrator kann zur Messung und Kalibrierung des Temperaturmessfühlers diskrete Kalibriertemperaturen anfahren und über eine Zeitdauer halten, bis der Temperaturmessfühler die Kalibriertemperatur angenommen hat, wobei daraufhin auf der Temperaturmesseinheit, mit der der Temperaturmessfühler verbunden ist, die gemessene Temperatur angezeigt und von einem Bediener abgelesen wird, wobei der abgelesene Temperaturwert mit der Kalibriertemperatur des Temperaturkalibrators beispielsweise in °C verglichen wird. Entsprechende Abweichungen bilden sodann den Kalibrierwert.

Aus der DE 10 2018 121 015 A1 ist ein Verfahren zum Kalibrieren einer Temperaturmesseinrichtung mit einer Temperaturmesseinheit und wenigstens einem an der Temperaturmesseinheit anschließbaren Temperaturmessfühler bekannt, und es wird zwischen dem Temperaturkalibrator und der Temperaturmesseinrichtung ein Kommunikationskanal aufgebaut, sodass ein Kalibrierwert vom Temperaturkalibrator an die Temperaturmesseinrichtung mittels es Kommunikationskanals übertragen wird. Der Kommunikationskanal kann drahtgebunden oder drahtlos ausgebildet sein. Ist der Kommunikationskanal drahtlos ausgeführt, kann beispielsweise eine Nahfeldkommunikation, etwa Bluetooth oder dergleichen, genutzt werden.

Nachteilhafterweise muss für den Aufbau eines solchen Kommunikationskanals nicht nur der Temperaturkalibrator eingerichtet sein, sondern auch die Temperaturmesseinheit muss eine entsprechende Schnittstelle aufweisen, um den Kommunikationskanal aufzubauen, die gemeinsam mit dem Temperaturmessfühler den eigentlichen Prüfling bildet. Wird der Temperaturkalibrator mit verschiedenen Temperaturmessfühlern und zugeordneten Temperaturmesseinheiten genutzt, beispielsweise im Umfeld eines Labors, einer Fertigung oder einer sonstigen Einrichtung, so muss jede Temperaturmesseinheit zum Aufbau eines solchen Kommunikationskanals geeignet sein, also eine passende Schnittstelle aufweisen. Jedoch müssen mit dem Temperaturkalibrator mit einem entsprechenden Kalibrieraufbau auch einfache, zum Beispiel handhaltbare Temperaturmesseinheiten kalibrierbar sein, die beispielsweise nur über ein einfaches Anzeigemittel verfügen.

Um eine Temperaturmesseinheit in Verbindung mit dem Temperaturmessfühler über einen weiten Temperaturbereich zu kalibrieren, muss in der Regel ein Temperaturbereich durchfahren oder es müssen mehrere diskrete Niveaus von Kalibriertemperaturen angefahren werden, und sobald ein entsprechendes Niveau einer angefahrenen Kalibriertemperatur erreicht ist, muss ein Benutzer den angezeigten Temperaturwert auf dem Anzeigemittel der Temperaturmesseinheit ablesen und dokumentieren, oder im oder am Temperaturkalibrator über ein entsprechendes Kalibrator-Anzeigedisplay eingeben. Folglich muss ein Benutzer für jeden Kalibrieraufbau wenigstens zu mehreren Zeitpunkten anwesend sein und diesen überwachen, um die gemessenen Kalibriertemperaturen auf den verschiedenen Niveaus zu dokumentieren, was bei mehreren Kalibrierungen oder bei einer größeren Anzahl von insbesondere langsam anzufahrenden Niveaus von Kalibriertemperaturen zeitintensiv und damit Ressourcen bindend ist.

### OFFENBARUNG DER ERFINDUNG

Die Aufgabe der Erfindung besteht in der Vereinfachung einer Übertragung eines Kalibrierwertes zur weiteren Nutzung, welcher auf der Temperaturmesseinheit angezeigt wird. Die Aufgabe besteht dabei insbesondere in einem verbesserten Kalibrieraufbau, der zur Kalibrierung eines Temperturmessfühlers in Verbindung mit einer Temperaturmesseinheit dient und bei dem während des Kalibriervorgangs und dem Anfahren verschiedenen Kalibriertemperaturniveaus ein Benutzer nicht dauerhaft anwesend sein muss, um den angezeigten Temperaturwert auf einem Anzeigemittel der Temperaturmesseinheit zum richtigen Zeitpunkt abzulesen.

Diese Aufgabe wird ausgehend von einem Verfahren gemäß dem Oberbegriff des Anspruches 1 und ausgehend von einem Kalibrieraufbau gemäß dem Oberbegriff des Anspruches 6 mit den jeweils kennzeichnenden Merkmalen gelöst. Vorteilhafte Weiterbildungen der Erfindung sind in den abhängigen Ansprüchen angegeben.

Die Erfindung schließt die technische Lehre ein, dass eine Kameraeinheit vorgesehen und dazu eingerichtet ist, den auf dem Anzeigemittel der Temperaturmesseinheit angezeigten Temperaturwert zu erfassen und an ein Speichermedium zu übermitteln.

Kerngedanke der Erfindung ist die Nutzung einer Kameraeinheit zur Ablesung des oder der Temperaturwerte, die auf dem Anzeigemittel, also beispielsweise auf einem Display, der Temperaturmesseinheit angezeigt werden. Die Kameraeinheit muss hierfür nur so positioniert werden, dass das Anzeigemittel mit der Kameraeinheit aufgenommen werden kann, wodurch ein weiteres Merkmal des Kalibrieraufbaus gebildet ist. Das Speichermedium kann dabei Bestandteil der Kameraeinheit sein oder dieses ist separat ausgebildet, beispielsweise in Form einer Speichereinheit.

Insbesondere ist es von Vorteil, wenn das Speichermedium im Temperaturkalibrator eingerichtet ist, wobei die Kameraeinheit den erfassten Temperaturwert an das Speichermedium im Temperaturkalibrator übermittelt. Ist das Speichermedium im Temperaturkalibrator integriert, so übermittelt die Kameraeinheit den vom Anzeigemittel aufgenommenen Temperaturwert gewissermaßen direkt an den Temperaturkalibrator. Im Temperaturkalibrator kann der Temperaturwert entsprechend abgespeichert werden, insbesondere im Speichermedium. Werden mehrere Temperaturwerte abgelesen, korrespondierend zu verschiedenen Niveaus von Kalibriertemperaturen, so können auch mehrere Temperaturwerte im Speichermedium und damit im Temperaturkalibrator abgelegt werden. Die Ablage der Temperaturwerte kann insbesondere einem Temperaturmessfühler und/oder einer Temperaturmesseinheit zugeordnet werden, insbesondere um die Kalibrierhistorie des Temperaturmessfühlers beziehungsweise der Temperaturmesseinheit zu dokumentieren, insbesondere im Temperaturkalibrator.

Die Kameraeinheit ist mit besonderem Vorteil zur Aufnahme von Fotos und/oder zur Aufnahme Videos von dem Anzeigemittel ausgebildet, sodass die Temperaturwerte an das Speichermedium vermittels eines oder mehrerer Fotos oder vermittels eines oder mehrerer Videos übermittelt werden können. So kann ein Foto während der Kalibrierung dann gemacht werden, wenn beispielsweise ein erstes, ein zweites oder ein weiteres Niveau der Kalibriertemperatur angefahren wurde, und es kann das Anzeigemittel so auf dem Foto erfasst sein, dass der Temperaturwert auf dem Foto und in gleicher Weise auch auf dem Video abgelesen werden kann, wobei das Foto und/oder das Video nach der Übermittlung an das Speichermedium beispielsweise auch auf einem Anzeigedisplay des Kalibrators angezeigt werden kann, insbesondere korrelierend zum Niveau der angefahrenen Kalibriertemperatur. Damit kann auf einfache Weise zum einen der Kalibrierwert abgelesen oder bestimmt werden und es kann eine Dokumentation erfolgen, insbesondere zugeordnet zu einer Temperaturmesseinheit und/oder zu einem Temperaturmessfühler.

Beispielsweise kann dann, wenn die Kameraeinheit an dem Temperaturkalibrator angeschlossen ist, ein Signal vom Temperaturkalibrator an die Kameraeinheit ausgegeben werden, um insbesondere nur zum erforderlichen Zeitpunkt das Foto oder das Video z.B. als kurze Sequenz aufzunehmen. Der Zeitpunkt ist beispielsweise dann gegeben, wenn ein Niveau einer Kalibriertemperatur erreicht ist oder nach einer Haltezeit gehalten wurde.

Im Rahmen einer Weiterbildung der Erfindung besteht die Möglichkeit, dass die Kameraeinheit eine elektronische Kamera und erfindungsgemäß zusätzlich eine Bildverarbeitungseinheit aufweist, mittels der der auf dem Anzeigemittel angezeigte Temperaturwert als elektronischer Zahlenwert ermittelbar und dieser elektronische Zahlenwert von der Kameraeinheit ausgebbar und insbesondere an das Speichermedium übermittelbar ist.

Die Bildverarbeitungseinheit kann dabei nicht erfindungsgemäß auch Bestandteil des Speichermediums sein, insbesondere integriert im Temperaturkalibrator. Das Anzeigemittel, also beispielsweise das Display auf der Temperturmesseinheit, wird mit der elektronischen Kamera fotografiert oder es wird eine Videosequenz erzeugt, und anschließend wird über die Bildverarbeitungseinheit der auf dem Anzeigemittel angezeigte Zahlenwert erfasst und entsprechend an das Speichermedium übermittelt. Denkbar ist zudem auch die bereits erfolgte Erfassung des Zahlenwertes der Temperatur durch die Bildverarbeitungseinheit und zugleich die Übertragung des aufgenommenen Fotos oder der aufgenommenen Videosequenz, insbesondere im Rahmen einer umfassenderen Dokumentation.

Der Temperaturkalibrator weist ein Kalibrator-Anzeigedisplay auf, und auf dem an sich bekannten Anzeigedisplay des Kalibrators wird in weiterführender Ausgestaltung erfindungsgemäß das Foto und/oder das Video und/oder insbesondere der erfasste Temperaturwert in Form eines Zahlenwertes angezeigt. Die Anzeige kann insbesondere in Korrelation mit der Kalibriertemperatur erfolgen, beispielsweise dergestalt, dass einem Betrachter des Fotos oder des bereits aus dem Foto erkannten Temperaturwertes zugleich die angefahrene Kalibriertemperatur angezeigt wird, sodass daraus unmittelbar ein Kalibrierwert ableitbar ist.

Auch ist es denkbar, dass die Kameraeinheit als eine Kameraeinheit eines Smartphones oder eines mobilen Tablet-PCs ausgebildet ist. Im einfachsten Fall kann ein Benutzer ein Smartphone vor dem Anzeigemittel der Temperturmesseinheit positionieren und über eine App kann eine drahtgebundene oder drahtlose Kommunikation mit dem Speichermedium insbesondere in Einheit mit dem Temperaturkalibrator aufgebaut werden, und die App erzeugt über die Kamera am Smartphone zur erforderlichen Zeit, insbesondere wenn das Niveau der Kalibriertemperatur erreicht ist, ein Foto, welches schließlich an das Speichermedium übertragen wird. Anschließend wird das Foto oder der mit der Bildverarbeitungseinheit ausgelesene Zahlenwert der Temperatur auf dem Kalibrator-Anzeigedisplay angezeigt. Die Kommunikation zwischen dem Smartphone und dem Temperaturkalibrator erfolgt beispielsweise über Bluetooth oder über eine sonstige Nahfeldkommunikation.

Die Erfindung richtet sich weiterhin auf ein Verfahren zum Betrieb eines Kalibrieraufbaus zum Kalibrieren eines Temperaturmessfühlers, wobei der Kalibrieraufbau einen Temperaturkalibrator aufweist, in den der Temperaturmessfühler eingesetzt und auf eine Kalibriertemperatur aufgeheizt wird, und wobei der Kalibrieraufbau eine Temperaturmesseinheit aufweist, mit der der Temperaturmessfühler verbunden ist und mit der ein gemessener Temperaturwert auf einem Anzeigemittel der Temperaturmesseinheit angezeigt wird. Das Verfahren zeichnet sich dadurch aus, dass zunächst eine Kameraeinheit bereitgestellt wird, und anschließend erfolgt ein Erfassen des Temperaturwertes auf dem Anzeigemittel der Temperaturmesseinheit mit der Kameraeinheit und anschließend wird der Temperaturwert von der Kameraeinheit an ein Speichermedium übermittelt.

Es werden mehrere Temperaturwerte mit der Kameraeinheit erfasst, und die Temperaturwerte werden korrelierend mit mittels des Temperaturkalibrators angefahrenen Solltemperaturen zeitlich zugeordnet im Speichermedium abgespeichert. Somit kann ein Bediener des Kalibrieraufbaus das Verfahren starten und den Kalibrieraufbau verlassen, und nach erreichter maximaler Kalibriertemperatur, also bei Erreichen des höchsten Niveaus der Kalibriertemperatur, kann die Kalibrierung beendet werden, und der Benutzer kann sämtliche Temperaturen der Temperaturniveaus aus dem Speichermedium abrufen, ohne dass der Bediener während der Kalibrierung den Kalibrieraufbau betreuen musste. Insbesondere dann, wenn in einer Anwendungsumgebung eine größere Anzahl von Kalibrierungen stattfinden muss, binden die Kalibrierungen mit dem erfindungsgemäßen Verfahren keine weiteren personellen Ressourcen.

Das Verfahren zeichnet sich weiterhin dadurch aus, dass mit der Kameraeinheit Fotos und/oder Videos von dem Anzeigemittel aufgenommen werden, wobei die Fotos und/oder Videos korrelierend mit mittels des Temperaturkalibrators angefahrenen Niveaus von Kalibriertemperaturen diesen zeitlich zugeordnet im Speichermedium abgespeichert werden. Auch besteht die Möglichkeit, dass mit einem Kalibrator-Anzeigedisplay des Temperaturkalibrators die mittels des Temperaturkalibrators angefahrenen Kalibriertemperaturen zeitlich zugeordnet mit den Temperaturwerten und/oder mit den Fotos und/oder Videos von dem Anzeigemittel anzeigt werden. Im Speichermedium insbesondere innerhalb des Temperaturkalibrators oder an einem peripheren Ort kann mittels der aufgenommenen Fotos oder Videos eine umfassende Dokumentation erfolgen, die insbesondere zur kalibrierten Temperaturmesseinheit zugeordnet hinterlegt wird.

Schließlich ist erfindungsgemäß weiterhin vorgesehen, dass die auf dem Anzeigemittel angezeigten und erfassten Temperaturwerte weiterführend mit einer Bildverarbeitungseinheit ermittelt und als digitale Werte an das Speichermedium zur Speicherung ausgegeben und/oder auf dem Kalibrator-Anzeigedisplay angezeigt werden. Beispielsweise können die aufgenommenen Fotos und/oder Videos zu Zwecken der Dokumentation zusätzlich im Speichermedium abgelegt werden, insbesondere zugeordnet zur Temperaturmesseinheit.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: einen Kalibrieraufbau zum Kalibrieren eines Temperaturmessfühlers mit der erfindungsgemäßen Einbindung einer Kameraeinheit,
- Figur 2: eine detaillierte Ansicht der Kameraeinheit zur Aufnahme des Anzeigemittels der Temperaturmesseinheit und mit dem Temperaturkalibrator und
- Figur 3: ein Diagramm, das verschiedene Temperaturniveaus der Kalibriertemperatur über der Zeit anzeigt.

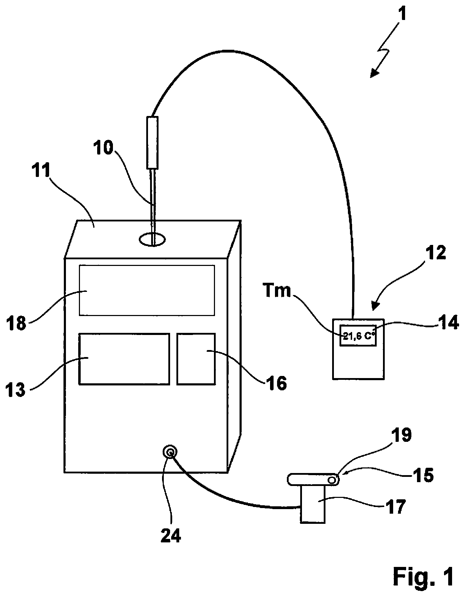

Figur 1 zeigt eine schematisierte Ansicht eines Kalibrieraufbaus 1 mit einem Temperaturkalibrator 11, in den ein Temperaturmessfühler 10 eingeführt ist. Der Temperaturkalibrator 11 heißt nach Beginn der Kalibrierung den Temperaturmessfühler 10 auf, um diesen auf eine Kalibriertemperatur zu bringen. Der Temperaturmessfühler 10 ist verbunden mit einer beispielsweise handhaltbaren, einfachen Temperaturmesseinheit 12, und die Temperaturmesseinheit 12 weist ein Anzeigemittel 14 auf, auf dem ein Temperaturwert 13 zur Anzeige gebracht wird. Ohne eine Abweichung wird auf dem Anzeigemittel 14 ein Temperaturwert 13 angezeigt, der dem Temperaturnniveau der angefahrenen Kalibriertemperatur des Temperaturkalibrators 11 entspricht. Die Temperaturmesseinheit 12 ist beispielhaft als handhaltbares Kleingerät ausgeführt, und zur Kalibrierung müssen mehrere Temperaturniveaus nacheinander angefahren werden. Um das Anzeigemittel 14 mit dem angezeigten Temperaturwert 13 in den richtigen Zeitpunkten der Kalibrierung, die einige Zeit dauern kann, auf einfache Weise abzulesen, ist erfindungsgemäß eine Kameraeinheit 15 vorgesehen. Die Kameraeinheit 15 besteht gemäß des Ausführungsbeispiels aus einer elektronischen Kamera 19 und einer Bildverarbeitungseinheit 17.

Die Kameraeinheit 15 ist so positioniert, dass mit der elektronischen Kamera 19 das Anzeigemittel 14 fotografiert oder gefilmt werden kann. Anschließend wird mit der Bildverarbeitungseinheit 17 das Foto oder das Video ausgewertet, und ein Temperaturwert 13 wird an ein Speichermedium 16 übermittelt. Das Ausführungsbeispiel zeigt das Speichermedium 16 als Bestandteil des Temperaturkalibrators 11, und das Speichermedium 16 ist beispielsweise integriert in den Temperaturkalibrator 11. Die gezeigte Kabelverbindung ist lediglich optional zu verstehen, und die Übertragung des Temperaturwertes 13, der erfasst wurde von der Kameraeinheit 15, kann auch drahtlos an das Speichermedium 16 insbesondere in Anordnung in oder am Temperaturkalibrator 11 übertragen werden.

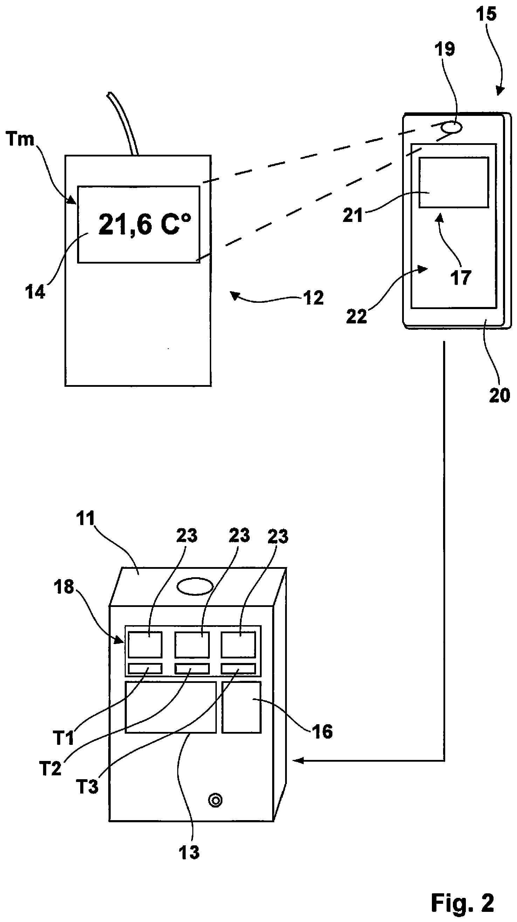

Figur 2 zeigt eine schematische Ansicht der Temperaturmesseinheit 12 mit dem Anzeigemittel 14, auf dem ein Temperaturwert 13 angezeigt wird. Die Kameraeinheit 15 ist beispielhaft als Smartphone 20 ausgebildet, welches in an sich bekannter Weise über eine elektronische Kamera 19 verfügt. Auf dem Smartphone 20 ist eine speziell für die Ausführung des erfindungsgemäßen Verfahrens ausgerichtete Anwendungssoftware 21 installiert, die über das Display 22 des Smartphones 20 bedient werden kann.

Das Smartphone 20 ist relativ zur Temperaturmesseinheit 12 so positioniert, dass mit der elektronischen Kamera 19 am Smartphone 20 der Temperaturwert 13 auf dem Anzeigemittel 14 fotografiert oder gefilmt werden kann. Der Temperaturwert 13 wird anschließend an das Speichermedium 16 drahtgebunden oder drahtlos übertragen, welches Speichermedium 16 sich beispielhaft integriert im Temperaturkalibrator 11 befindet.

Der Temperaturkalibrator 11 weist ein Kalibrator-Anzeigedisplay 18 auf, auf dem beispielhaft mehrere Fotos 23 dargestellt sind, auf denen - in nicht näher gezeigter Weise - Temperaturwerte ablesbar sind. Zugeordnet zu den Fotos 23, die auf dem Anzeigedisplay 18 des Temperaturkalibrator 11 angezeigt werden, wird zugeordnet jeweils die Kalibriertemperatur I, II und III angezeigt, sodass erst nach der Durchführung der Kalibrierung ein Bediener am Temperaturkalibrator 11 über das Anzeigedisplay 18 ablesen kann, ob Abweichungen zwischen den Niveaus I, II und/oder III der Kalibriertemperatur und dem Temperaturwert 13 auf dem Anzeigemittel 14 vorherrschen. Eine entsprechende Korrektur kann im Rahmen der Kalibrierung schließlich stattfinden. Die angezeigten Fotos 23 können im Speichermedium 16 überdies auch langfristig abgelegt werden, um insbesondere in Korrelation mit den angefahrenen Niveaus I, II, III der Kalibriertemperatur und beispielsweise einem Datum der Kalibrierung eine Historie zu dokumentieren, die die jeweilige Temperaturmesseinheit 12 betrifft. Beispielsweise kann für die Temperaturmesseinheit 12 bei einer späteren, nachfolgenden Kalibrierung die gemessene Historie der Temperaturwerte 13 über die Fotos 23 wieder angerufen werden. Der wesentliche Vorteil ist, dass der Bediener nicht über die gesamte Dauer der Kalibrierung warten muss, bis die geforderten Niveaus der Kalibriertemperatur angefahren wurden, um schließlich nur in den kurzen Zeitpunkten der angefahrenen Niveaus die gemessenen Temperaturwerte 13 auf dem Anzeigemittel 14 abzulesen.

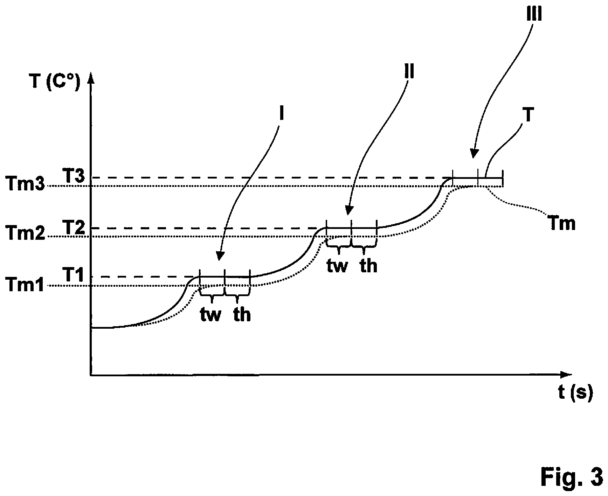

Figur 3 zeigt ein Diagramm der Kalibriertemperatur T in °C über der Zeit in Sekunden s. Die dargestellte Kurve zeigt die Kalibriertemperatur mit der durchgezogenen Linie, die kaskadenförmig mehrere Niveaus I, II und III der Kalibriertemperatur T anfährt. Die gestrichelte Linie zeigt den Temperaturwert 13 der Temperaturmesseinheit 12, wobei die Abweichung beispielhaft so dargestellt ist, dass der Verlauf des Temperaturwertes 13 nach unten hin abweicht vom Verlauf der Kalibriertemperatur T.

### Bezugszeichenliste:

- 1: Kalibrieraufbau

- 10: Temperaturmessfühler
- 11: Temperaturkalibrator
- 12: Temperaturmesseinheit
- 13: Steuereinheit
- 14: Anzeigemittel
- 15: Kameraeinheit
- 16: Speichermedium
- 17: Bildverarbeitungseinheit
- 18: Kalibrator-Anzeigedisplay
- 19: elektronische Kamera
- 20: Smartphone
- 21: Anwendungssoftware (App)
- 22: Display
- 23: Foto
- 24: Kameraschnittstelle
- T: Kalibriertemperatur in °C
- T1: Kalibriertemperatur in °C
- T2: Kalibriertemperatur in °C
- Tm: Temperaturwert in °C
- Tm1: Temperaturwert in °C
- Tm2: Temperaturwert in °C
- t: Zeit in Sekunden s
- I: erstes Niveau der Kalibriertemperatur
- II: zweites Niveau der Kalibriertemperatur
- III: drittes Niveau der Kalibriertemperatur

## Patentansprüche

1. Verfahren zum Kalibrieren eines Temperaturmessfühlers (10) mit einem Kalibrieraufbau (1), wobei der Kalibrieraufbau (1) einen Temperaturkalibrator (11) aufweist, in den der Temperaturmessfühler (10) eingesetzt und auf eine Kalibriertemperatur (T) aufgeheizt wird, wobei der Kalibrieraufbau (1) des Weiteren eine Temperaturmesseinheit (12) aufweist, mit der der Temperaturmessfühler (10) verbunden ist und mit der ein gemessener Temperaturwert (Tm) auf einem Anzeigemittel (14) der Temperaturmesseinheit (12) angezeigt wird, und wobei der Kalibrieraufbau (1) weiterhin eine Kameraeinheit (15) aufweist, mit der die Anzeige auf dem Anzeigemittel (14) aufnehmbar ist, und wobei
das Verfahren wenigstens die folgenden Schritte aufweist:
- Aufheizen des Temperaturmessfühlers (10) auf eine erste Kalibriertemperatur (T1),
- Erfassen eines ersten Temperaturwertes (Tm1) auf dem Anzeigemittel (14) der Temperaturmesseinheit (12) mit der Kameraeinheit (15),
- Übermitteln des ersten Temperaturwertes (Tm1) von der Kameraeinheit (15) an ein Speichermedium (16) im Temperaturkalibrator (11),
- Aufheizen des Temperaturmessfühlers (10) auf wenigstens eine zweite Kalibriertemperatur (T2),
- Erfassen eines zweiten Temperaturwertes (Tm2) auf dem Anzeigemittel (14) der Temperaturmesseinheit (12) mit der Kameraeinheit (15),
- Übermitteln des zweiten Temperaturwertes (Tm2) von der Kameraeinheit (15) an das Speichermedium (16) im Temperaturkalibrator (11) und
- Anzeigen der mehreren erfassten und gespeicherten Temperaturwerte (Tm1, Tm2) auf einem Kalibrator-Anzeigedisplay (18) in jeweiliger Zuordnung zur Kalibriertemperatur (T1, T2),
wobei der Temperaturkalibrator (11) eine Steuereinheit (13) aufweist, wobei mittels der Steuereinheit (13) das Aufheizen des Temperaturmessfühlers (10) auf mehrere Kalibriertemperaturen (T1, T2) und das Erfassen der mehreren Temperaturwerte (Tm1, Tm2) mit den folgenden Teilschritten ausgeführt wird:
- Prüfen der Kalibriertemperatur (T) mit einem Kalibriertemperaturfühler, ob die Kalibriertemperatur (T) im Temperaturkalibrator (11) im Wesentlichen stationär eine vorgegebene Kalibriertemperatur (T1, T2) erreicht hat,
- Einleiten einer Wartezeit (tw), in der die Temperatur des Temperaturmessfühlers (10) auf die Kalibriertemperatur (T1, T2) nacheilend aufheizt,
- Einleiten einer Haltezeit (th),
- Aufnehmen wenigstens eines Fotos (23) vom Anzeigemittel (14) der Temperaturmesseinheit (12) durch Aktivieren der Kameraeinheit (15) mittels der Steuereinheit (13) während der Haltezeit (th),
wobei während der Wartezeit (tw) ein oder mehrere Fotos (23) vom Anzeigemittel (14) der Temperaturmesseinheit (12) aufgenommen werden und die Temperaturwerte (Tm1, Tm2) mittels einer Bildverarbeitungseinheit (17) ermittelt und der Steuereinheit (13) zugeführt werden, wobei mittels der Temperaturwerte (Tm1, Tm2) ein Ende der Wartezeit (tw) mit der Steuereinheit (13) bestimmt wird,
wobei das Ende dann als erreicht angenommen wird, wenn keine oder nur noch eine minimale Änderung der Temperaturwerte (Tm1, Tm2) relativ zur Kalibriertemperatur (T1, T2) vorliegt,
sodass
- eine nächste Temperatur (T2) zur Kalibrierung mit der Steuereinheit (13) automatisiert angefahren wird, und sodass
- kaskadenförmig mehrere Niveaus I, II und III der Kalibriertemperatur (T) angefahren werden.

2. Verfahren nach Anspruch 1,
**dadurch gekennzeichnet,**
**dass** die mehreren Temperaturwerte (Tm1, Tm2) korrelierend mit den Kalibriertemperaturen (T1, T2) im Speichermedium (16) des Temperaturkalibrators (11) abgespeichert werden.

3. Verfahren nach Anspruch 1 oder 2,
**dadurch gekennzeichnet,**
**dass** mit der Kameraeinheit (15) Fotos (23) vom Anzeigemittel (14) der Temperaturmesseinheit (12) aufgenommen werden, wobei auf den Fotos (23) die Temperaturwerte (Tm1, Tm2) wiedergegeben sind.

4. Verfahren nach einem der Ansprüche 1 bis 3,
**dadurch gekennzeichnet,**
**dass** die mehreren erfassten und gespeicherten Temperaturwerte (Tm1, Tm2) auf dem Kalibrator-Anzeigedisplay (18) des Temperaturkalibrators (11) mittels der mit der Kameraeinheit (15) aufgenommenen Fotos (23) angezeigt werden.

5. Verfahren nach einem der vorgenannten Ansprüche,
**dadurch gekennzeichnet,**
**dass** die auf dem Anzeigemittel (14) angezeigten und erfassten Temperaturwerte (Tm1, Tm2) mit der Bildverarbeitungseinheit (17) ermittelt und als digitale Werte an das Speichermedium (16) zur Speicherung ausgegeben und/oder auf dem Kalibrator-Anzeigedisplay (18) angezeigt werden.

6. Kalibrieraufbau (1) zum Kalibrieren eines Temperaturmessfühlers (10), mit einem Temperaturkalibrator (11), in den der Temperaturmessfühler (10) einsetzbar und auf eine Kalibriertemperatur (T) aufheizbar ist, und mit einer Temperaturmesseinheit (12), mit der der Temperaturmessfühler (10) verbunden ist und mit der ein gemessener Temperaturwert (Tm1, Tm2) auf einem Anzeigemittel (14) der Temperaturmesseinheit (12) anzeigbar ist, wobei eine Kameraeinheit (15) vorgesehen ist, wobei die Kameraeinheit (15) eine Bildverarbeitungseinheit (17) aufweist, mittels der der auf dem Anzeigemittel (14) anzeigbare Temperaturwert (Tm1, Tm2) als elektronischer Zahlenwert ermittelbar und dieser von der Kameraeinheit (15) ausgebbar und/oder an ein Speichermedium (16) übermittelbar ist, und wobei die Kameraeinheit (15) dazu eingerichtet ist, den auf dem Anzeigemittel (14) angezeigten Temperaturwert (Tm1, Tm2) zu erfassen und an das Speichermedium (16) zu übermitteln, wobei das Speichermedium (16) Bestandteil des Temperaturkalibrators (11) ist, **dadurch gekennzeichnet, dass** der Temperaturkalibrator (11) eine Steuereinheit (13) aufweist, die dazu eingerichtet ist, das Verfahren nach einem der Ansprüche 1 bis 5 auszuführen.

7. Kalibrieraufbau (1) nach Anspruch 6,
**dadurch gekennzeichnet,**
**dass** die Kameraeinheit (15) zur Aufnahme von Fotos (23) und/oder Videos von dem Anzeigemittel (14) ausgebildet ist, wobei der Temperaturkalibrator (11) eine Kameraschnittstelle (24) aufweist,

8. Kalibrieraufbau (1) nach einem der Ansprüche 6 und 7,
**dadurch gekennzeichnet,**
**dass** der Temperaturkalibrator (11) ein Kalibrator-Anzeigedisplay (18) aufweist, das dazu eingerichtet ist, die mit der Kameraeinheit (15) erfassten Fotos (23) anzuzeigen.

9. Kalibrieraufbau (1) nach einem der Ansprüche 6 bis 8,
**dadurch gekennzeichnet,**
**dass** die Kameraeinheit (15) als eine Kameraeinheit eines Smartphones (20) oder eines mobilen Tablet-PCs ausgebildet ist.

## Claims

1. A method of calibrating a temperature sensor (10) using a calibration setup (1), wherein the calibration setup (1) has a temperature calibrator (11) into which the temperature sensor (10) is inserted and is heated to a calibration temperature (T); wherein the calibration setup (1) furthermore has a temperature measuring unit (12) to which the temperature sensor (10) is connected and by which a measured temperature value (Tm) is displayed on a display means (14) of the temperature measuring unit (12); and wherein the calibration setup (1) furthermore has a camera unit (15) by which the display on the display means (14) can be recorded; and
wherein the method comprises at least the following steps:
- heating the temperature sensor (10) to a first calibration temperature (T1);
- detecting a first temperature value (Tm1) on the display means (14) of the temperature measuring unit (12) by the camera unit (15);
- transmitting the first temperature value (Tm1) from the camera unit (15) to a storage medium (16) in the temperature calibrator (11);
- heating the temperature sensor (10) to at least a second calibration temperature (T2);
- detecting a second temperature value (Tm2) on the display means (14) of the temperature measuring unit (12) by the camera unit (15);
- transmitting the second temperature value (Tm2) from the camera unit (15) to the storage medium (16) in the temperature calibrator (11); and
- displaying the plurality of detected and stored temperature values (Tm1, Tm2) on a calibrator indicator display (18) in a respective association with the desired temperature (T1, T2);
wherein the temperature calibrator (11) has a control unit (13), with the heating of the temperature sensor (10) to the plurality of calibration temperatures (T1, T2) by means of the control unit (13) and the detection of the plurality of temperature values (Tm1, Tm2) being carried out by the following part steps:
- checking the calibration temperature (T) using a calibration temperature sensor as to whether the calibration temperature (T) in the temperature calibrator (11) has reached a predefined calibration temperature (T1, T2) in a substantially stationary manner;
- instigating a waiting time (tw) in which the temperature of the temperature sensor (10) is heated to the calibration temperature (T1, T2) in a lagging manner;
- instigating a holding time (th);
and recording at least one photo (23) of the display means (14) of the temperature measuring unit (12) by activating the camera unit (15) by means of the control unit (13) during the holding time (th);
wherein one or more photos (23) of the display means (14) of the temperature measuring unit (12) are recorded during the waiting time (tw) and the temperature value (Tm1, Tm2) are determined and supplied to the control unit (13) by means of the image processing unit (17), with an end of the waiting time (t2) being determined by the control unit (13) by means of the temperature values (Tm1, Tm2), with the end being assumed to have been reached when no change or only a minimal change of the temperature values (Tm1, Tm2) relative to the desired temperature (T1, T2) is present
so that
- a next temperature (T2) for calibration by the control unit (13) is automatically moved to and
so that
- a plurality of levels I, II, and III of the calibration temperature (T) are moved to.

2. A method in accordance with claim 1,
**characterized in that**
the plurality of temperature values (Tm1, Tm2) are stored correlating with the calibration values (T1, T2) in the storage medium (16) of the temperature calibrator (11).

3. A method in accordance with claim 1 or claim 2,
**characterized in that**
photos (23) of the display means (14) of the temperature measuring unit (12) are recorded by the camera unit (15), with the temperature values (Tm1, Tm2) being reproduced on the photos (23).

4. A method in accordance with one of the claims 1 to 3,
**characterized in that**
the plurality of detected and stored temperature values (Tm1, Tm2) are displayed on the calibrator indicator display (18) of the temperature calibrator (11) by means of the photos (23) recorded by the camera unit (15).

5. A method in accordance with one of the preceding claims,
**characterized in that**
the temperature values (Tm1, Tm2) displayed and detected on the display means (14) are determined by the image processing unit (17) and are output as digital values to the storage medium (16) for storage and/or are displayed on the calibrator indicator display (18).

6. A calibration setup (1) for calibrating a temperature sensor (10) having a temperature calibrator (11) into which the temperature sensor (10) can be inserted and can be heated to a calibration temperature (T), and having a temperature measuring unit (12) to which the temperature sensor (10) is connected and by which a measured temperature value (Tm1, Tm2) can be displayed on the display means (14) of the temperature measuring unit (12), wherein a camera unit (15) is provided, wherein the camera unit (15) has an image processing unit (17) by means of which the temperature value (Tm1, Tm2) that can be displayed on the display means (14) can be determined as an electronic numerical value and the latter can be output by the camera unit (15) and/or can be transmitted to the storage medium (16), and wherein the camera unit is configured to detect the temperature value (Tm1, Tm2) displayed on the display means (14) and to transmit it to the storage medium (16),
wherein the storage medium (16) is a component of the temperature calibrator (10),
**characterized in that** the temperature calibrator (11) has a control unit (13) that is configured to carry out the method in accordance with one of the claims 1 to 5.

7. A calibration setup (1) in accordance with claim 6,
**characterized in that**
the camera unit (15) is configured to record photos (23) and/or videos of the display means (14), with the temperature calibrator (11) having a camera interface (24).

8. A calibration setup 1) in accordance with one of the claims 6 and 7,
**characterized in that**
the temperature calibrator (11) has a calibrator indicator display (18) that is configured to display photos (23) detected by the camera unit (15).

9. A calibration setup 1) in accordance with one of the claims 6 to 9,
**characterized in that**
the camera unit (15) is configured as a camera unit of a smartphone (20) or of a portable tablet PC.

## Revendications

1. Procédé d'étalonnage d'une sonde de température (10) par le biais d'une structure d'étalonnage (1), la structure d'étalonnage (1) présentant un étalonneur de température (11) dans lequel la sonde de température (10) est placée et chauffée à une température d'étalonnage (T), la structure d'étalonnage (1) présentant en outre une unité de mesure de température (12) à laquelle est reliée la sonde de température (10) et par laquelle une valeur de température mesurée (Tm) est affichée sur un moyen d'affichage (14) de l'unité de mesure de température (12), et la structure d'étalonnage (1) présentant en outre une unité de caméra (15) par laquelle l'affichage présent sur le moyen d'affichage (14) peut être enregistré, et le procédé présentant au moins les étapes suivantes :
- chauffage de la sonde de température (10) à une première température d'étalonnage (T1),
- acquisition, par l'unité de caméra (15), d'une première valeur de température (Tm1) présente sur le moyen d'affichage (14) de l'unité de mesure de température (12)
- transmission de la première valeur de température (Tm1) de l'unité de caméra (15) à un support de stockage (16) situé dans l'étalonneur de température (11),
- chauffage de la sonde de température (10) à au moins une seconde température d'étalonnage (T2),
- acquisition, par l'unité de caméra (15), d'une seconde valeur de température (Tm2) présente sur le moyen d'affichage (14) de l'unité de mesure de température (12),
- transmission de la seconde valeur de température (Tm2) de l'unité de caméra (15) au support de stockage (16) situé dans l'étalonneur de température (11) et
- affichage des plusieurs valeurs de température (Tm1, Tm2) acquises et enregistrées sur un écran d'affichage d'étalonneur (18) en les associant respectivement à la température d'étalonnage (T1, T2),
dans lequel l'étalonneur de température (11) présente une unité de commande (13), dans lequel le chauffage de la sonde de température (10) à plusieurs températures d'étalonnage (T1, T2) et l'acquisition des plusieurs valeurs de température (Tm1, Tm2) sont exécutés au moyen de l'unité de commande (13) par les étapes partielles suivantes :
- vérification de la température d'étalonnage (T) par une sonde de température d'étalonnage, afin de déterminer si la température d'étalonnage (T) dans l'étalonneur de température (11) a atteint de manière sensiblement stationnaire une température d'étalonnage (T1, T2) prédéfinie,
- déclenchement d'un temps d'attente (tw), pendant lequel la température de la sonde de température (10) chauffe à la température d'étalonnage (T1, T2) avec un retard,
- déclenchement d'un temps de maintien (th),
- enregistrement d'au moins une photographie (23) du moyen d'affichage (14) de l'unité de mesure de température (12) par l'activation de l'unité de caméra (15) au moyen de l'unité de commande (13) pendant le temps de maintien (th),
dans lequel, pendant le temps d'attente (tw), une ou plusieurs photographies (23) du moyen d'affichage (14) de l'unité de mesure de température (12) sont enregistrées et les valeurs de température (Tm1, Tm2) sont déterminées au moyen d'une unité de traitement d'image (17) et fournies à l'unité de commande (13), dans lequel, au moyen des valeurs de température (Tm1, Tm2), une fin du temps d'attente (tw) est déterminée par l'unité de commande (13), dans lequel la fin est ensuite considérée comme atteinte quand il n'y a aucune modification ou seulement encore une modification minimale des valeurs de température (Tm1, Tm2) par rapport à la température d'étalonnage (T1, T2), de telle sorte que
- une température suivante (T2) est ciblée automatiquement par l'unité de commande (13) pour l'étalonnage, et de telle sorte que
- plusieurs niveaux I, II et III de la température d'étalonnage (T) sont ciblés en cascade.

2. Procédé selon la revendication 1,
**caractérisé en ce que**
les plusieurs valeurs de température (Tm1, Tm2) sont enregistrées dans le support de stockage (16) de l'étalonneur de température (11) en corrélation avec les températures d'étalonnage (T1, T2).

3. Procédé selon la revendication 1 ou 2,
**caractérisé en ce que**
des photographies (23) du moyen d'affichage (14) de l'unité de mesure de température (12) sont enregistrées par l'unité de caméra (15), les valeurs de température (Tm1, Tm2) étant reproduites sur les photographies (23).

4. Procédé selon l'une des revendications 1 à 3,
**caractérisé en ce que**
les plusieurs valeurs de température (Tm1, Tm2) acquises et enregistrées sont affichées sur l'écran d'affichage d'étalonneur (18) de l'étalonneur de température (11) au moyen des photographies (23) enregistrées par l'unité de caméra (15).

5. Procédé selon l'une des revendications précédentes,
**caractérisé en ce que**
les valeurs de température (Tm1, Tm2) affichées et acquises sur le moyen d'affichage (14) sont déterminées par l'unité de traitement d'image (17) et fournies en sortie sous la forme de valeurs numériques au support de stockage (16) en vue de l'enregistrement et/ou sont affichées sur l'écran d'affichage d'étalonneur (18).

6. Structure d'étalonnage (1) pour l'étalonnage d'une sonde de température (10), comportant un étalonneur de température (11) dans lequel la sonde de température (10) peut être placée et chauffée à une température d'étalonnage (T) et comportant une unité de mesure de température (12) à laquelle est reliée la sonde de température (10) et par laquelle une valeur de température mesurée (Tm1, Tm2) peut être affichée sur un moyen d'affichage (14) de l'unité de mesure de température (12), une unité de caméra (15) étant prévue, l'unité de caméra (15) présentant une unité de traitement d'image (17), au moyen de laquelle la valeur de température (Tm1, Tm2) affichable sur le moyen d'affichage (14) peut être déterminée sous la forme d'une valeur numérique électronique et cette dernière peut être fournie en sortie par l'unité de caméra (15) et/ou peut être transmise à un support de stockage (16), et l'unité de caméra (15) étant configurée pour acquérir la valeur de température (Tm1, Tm2) affichée sur le moyen d'affichage (14) et la transmettre au support de stockage (16),
dans laquelle le support de stockage (16) fait partie de l'étalonneur de température (11), **caractérisée en ce que** l'étalonneur de température (11) présente une unité de commande (13) qui est configurée pour exécuter le procédé selon l'une des revendications 1 à 5.

7. Structure d'étalonnage (1) selon la revendication 6,
**caractérisée en ce que**
l'unité de caméra (15) est conçue pour enregistrer des photographies (23) et/ou des vidéos du moyen d'affichage (14), l'étalonneur de température (11) présentant une interface pour caméra (24).

8. Structure d'étalonnage (1) selon l'une des revendications 6 et 7,
**caractérisée en ce que**
l'étalonneur de température (11) présente un écran d'affichage d'étalonneur (18), qui est configuré pour afficher les photographies (23) acquises par l'unité de caméra (15).

9. Structure d'étalonnage (1) selon l'une des revendications 6 à 8,
**caractérisée en ce que**
l'unité de caméra (15) est réalisée sous la forme d'une unité de caméra d'un mobile multifonction (20) ou d'une tablette électronique mobile.
